# EUROPEAN PATENT APPLICATION

(11) **EP 2 733 938 A1**
(43) Date of publication of application: **21.05.2014**
(21) Application number: 13193453.1
(22) Date of filing: 19.11.2013
(51) Int. Cl.: H04N 7/18

(54) **Electronic viewer for peephole**

(30) Priority: 20.11.2012 TW 101222413
(71) Applicant: Brinno Incorporated, 11493 Taipei (TW)
(72) Inventor: Wei, Tien-Ho, 11493 Taipei (TW)
(74) Representative: Viering, Jentschura & Partner Patent- und Rechtsanwälte

(57) **Abstract**

An electronic viewer for peephole contains an image capture unit (122) for shooting images; a main circuit board (120) including an application specific integrated circuit electrically connected with the image capture unit (122) so as to control the image capture unit (122) to shoot the images; a flat panel display unit (121) electrically connected with the main circuit board (120) so as to display the images shot by the image capture unit (122); an ambient light sensor (124) electrically coupled with the main circuit board (120) so as to sense a change of an ambient light source. Thereby, when the ambient light source changes, an electronic viewer (100) is driven to operate the application specific integrated circuit, and the application specific integrated circuit controls the image capture unit (122) to shoot the images so that the flat panel display unit (121) displays the images.

## Description

### FIELD OF THE INVENTION

The present invention relates to an electronic viewer for peephole, and more particularly to an electronic viewer for peephole which applies an ambient light sensor to sense an object.

### BACKGROUND OF THE INVENTION

A conventional residential video surveillance device or an electronic viewer for peephole contains a motion sensor fixed therein, and the motion sensor is any one of a pyroelectric infrared radial (PIR) sensor, a proximity sensor, an ultrasonic sensor, and a camera. The images shot are analyzed and judged when an object moves, the camera can be therefore used as a motion sensor.

The pyroelectric infrared radial (PIR) sensor senses a change of electric charge caused by a human temperature and ambient temperature. In other words, when an element is heated, a positive charge and a negative charge occur on two ends of a heated surface and an unheated surface. In the meantime, an electric current passes through a resistance resulting from a parallel connection of the two ends of the element, like a voltage signal. When a comparison voltage is higher than a preset value, the sensor makes an alert so as to function an anti-theft alarm, visitor electric door, non-contact switch and fire alarm. Typically, pyroelectric infrared sensor only senses an object within 1 to 2M. To solve such a problem, a convex lens is applied to focus infrared energy to a sensing point of the pyroelectric infrared sensor, thus increasing sensing distance. Preferably, plural convex lenses are arranged together so as to form a lens array, thereby increasing sensing point. Furthermore, the convex lens is made of polyethylene (PE) so as to avoid light interference.

Likewise, Fresnel lens is popular in a reflective or refractive type so as to focus pyroelectric infrared signals which are reflected to pyroelectric infrared sensor. The Fresnel lens divides a sensing range into a bright area and a dark area so that when the object generates a temperature change, the pyroelectric infrared sensor changes pyroelectric infrared signals.

Accordingly, a passive pyroelectric infrared sensor has the following disadvantages: 1. Signal amplitude is small, sensing signals are easily interfered by heat source or light source; 2. The infrared radiation of human body is shielded, so the passive pyroelectric infrared sensor cannot clearly sense human body exactly; 3. RF radiation interferes the passive pyroelectric infrared sensor; 4. When the ambient temperature is close to body temperature, sensing sensitivity decreases; 5. The passive pyroelectric infrared sensor is provided to sense horizontal motion, so it cannot sense a radial motion precisely. From above-mentioned descriptions, the passive pyroelectric infrared sensor is limited to fix in an indoor condition. Furthermore, when infrared rays penetrate a glass, the optical density loses. For instance, a residential video surveillance device or an electronic viewer for peephole is fixed on a glass door, the passive pyroelectric infrared sensor cannot sense object.

The proximity sensing technology is applied to capture and process infrared signals, and an optical front end is comprised of a light emitting diode (LED) and an optical sensor, wherein the light emitting diode is used for transmitting infrared signals after sensing the object, and then a part of infrared signals is reflected and sensed by complementary metal-oxide- semiconductor (CMOS). However, when the objected cannot be sensed in an adjacent sensing path, the proximity sensor cannot capture the reflected infrared signals. In contrast, when the objected is located in a detectable distance, the proximity sensor captures the reflected infrared signals. Also, a proximity reading number and strength of infrared light signals are at linear proportion, and the proximity reading number and distance squared of the infrared light signals are at inverse proportion. By using a signal adjustment on the chip and an analog to digital converter, digital infrared signals are processed by a microprocessor or a microcontroller (MCU) of the proximity sensor.

A typical infrared proximity sensing system is comprised of an optical front end, an analog mixed-signal processing circuit, and a mechanical structure.

The proximity sensing system can detect objects that are moving close to or far away thereof, the microprocessor or the microcontroller (MCU) are controlled and adjusted complicatedly. For example, when the proximity sensing system is applied in a cellular phone, it senses that a user contacts his/her ears with the cellular phone, so the microcontroller (MCU) turns off a sub-system, such as a display screen, a keyboard, or a touch screen, thus saving power.

When a residential video surveillance device or an electronic viewer for peephole is provided with a proximity sensor, the manufacturer has to consider a proximity sensing principle, circuit building blocks, a mechanical design, an infrared light-emitting diode, a component configuration size, a size and an arrangement of glass viewing window, proximity sensing system algorithms, a typical amount of proximity measured. Also, it is necessary for the manufacturer to notice whether optical density may lose when infrared rays penetrate the glass. When another glass door is fixed among a video monitoring device, a digital door eye device, and sensing objects, the passive pyroelectric infrared sensor is interfered.

It is to be noted that the ultrasonic sensor can be adopted for the electronic viewer so as to enhance a sensing yield, and the ultrasonic sensor is comprised of a sonic transmitter, a receiver and a control circuit. When the ultrasonic sensor is triggered, it will launch a series of 40 kHz acoustic and ultrasonic sensors and receive echo from an object closet to the object. But for human being, ultrasonic frequency is too high to hear ultrasonic sound, and a sound propagation speed in air is about 340 meters/per second, wherein a transmission speed will be affected by a temperature, and the higher the temperature is, the faster the spread is. Unfortunately, the ultrasonic sensor is produced at a high cost, and it cannot sense the object in a wide range.

When the video surveillance devices or the digital door eye device have the ultrasonic sensor, or when another layer of the glass door is mounted among the video monitoring device, the digital door eye device, and the sensing objects, it will affect the ultrasonic sensor.

The present invention has arisen to mitigate and/or obviate the afore-described disadvantages.

### SUMMARY OF THE INVENTION

The primary object of the present invention is to provide an electronic viewer for peephole which applies an ambient light sensor to sense a change of ambient light source, and then an electronic viewer is driven to operate an application specific integrated circuit, thereafter the application specific integrated circuit controls an image capture unit to shoot images so that a flat panel display unit displays the images.

Secondary object of the present invention is to provide an electronic viewer for peephole which applies the ambient light sensor to sense the change of the ambient light source, and then the electronic viewer is driven to operate the application specific integrated circuit, thereafter the application specific integrated circuit controls the image capture unit to shoot images so that the flat panel display unit displays the images, wherein the electronic viewer enters a sleep mode automatically after a period of set time so as to power off the flat panel display unit, thus saving power consumption.

Further object of the present invention is to provide an electronic viewer for peephole which applies the ambient light sensor to sense the change of the ambient light source, wherein a backlight brightness of the flat panel display unit is adjusted based on the change of the ambient light source so as to maintain brightness and save power consumption.

Another object of the present invention is to provide an electronic viewer for peephole which applies an ambient light sensor to sense the change of ambient light source, and then the electronic viewer is driven to operate the application specific integrated circuit, thereafter the application specific integrated circuit controls the image capture unit to shoot the images so that the flat panel display unit displays the images, and the images are stored in the electronic viewer.

To obtain the above objective, an electronic viewer for peephole provided by the present invention contains: an image capture unit for shooting images; a main circuit board including an application specific integrated circuit electrically connected with the image capture unit so as to control the image capture unit to shoot the images; a flat panel display unit electrically connected with the main circuit board so as to display the images shot by the image capture unit; an ambient light sensor electrically coupled with the main circuit board so as to sense a change of an ambient light source.

### BRIEF DESCRIPTION OF THE DRAWINGS

FIG. 1A is a perspective view showing the exploded components of an electronic viewer for peephole according to a first embodiment of the present invention.
FIG. 1B is another perspective view showing the exploded components of the electronic viewer according to the first embodiment of the present invention.
FIG. 1C is also another perspective view showing the exploded components of the electronic viewer according to the first embodiment of the present invention.
FIG. 1D is still another perspective view showing the exploded components of the electronic viewer according to the first embodiment of the present invention.
FIG. 2A is a perspective view showing the assembly of the electronic viewer according to the first embodiment of the present invention.
FIG. 2B is another perspective view showing the assembly of the electronic viewer according to the first embodiment of the present invention.
FIG. 2C is also another perspective view showing the assembly of the electronic viewer according to the first embodiment of the present invention.
FIG. 3 is a perspective view showing the electronic viewer being fixed on a door or a wall according to the first embodiment of the present invention.
FIG. 4 is a cross sectional view showing the electronic viewer being fixed on the door or the wall according to the first embodiment of the present invention.
FIG. 5A is a perspective view showing the exploded components of an electronic viewer for peephole according to a second embodiment of the present invention.
FIG. 5B is another perspective view showing the exploded components of the electronic viewer according to the second embodiment of the present invention.
FIG. 5C is also another perspective view showing the exploded components of the electronic viewer according to the second embodiment of the present invention.
FIG. 5D is still another perspective view showing the exploded components of the electronic viewer according to the second embodiment of the present invention.
FIG. 6 is a cross sectional view showing the electronic viewer being fixed on a door or a wall according to the second embodiment of the present invention.

### DETAILED DESCRIPTION OF THE PREFERRED EMBODIMENTS

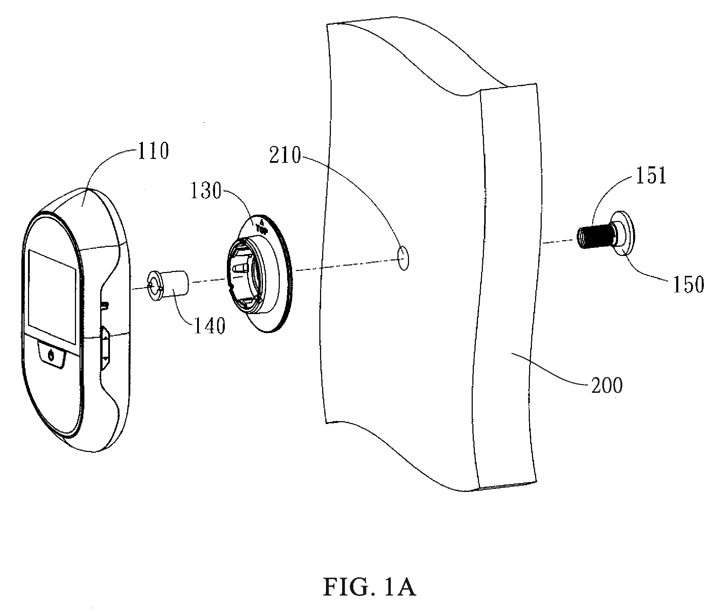

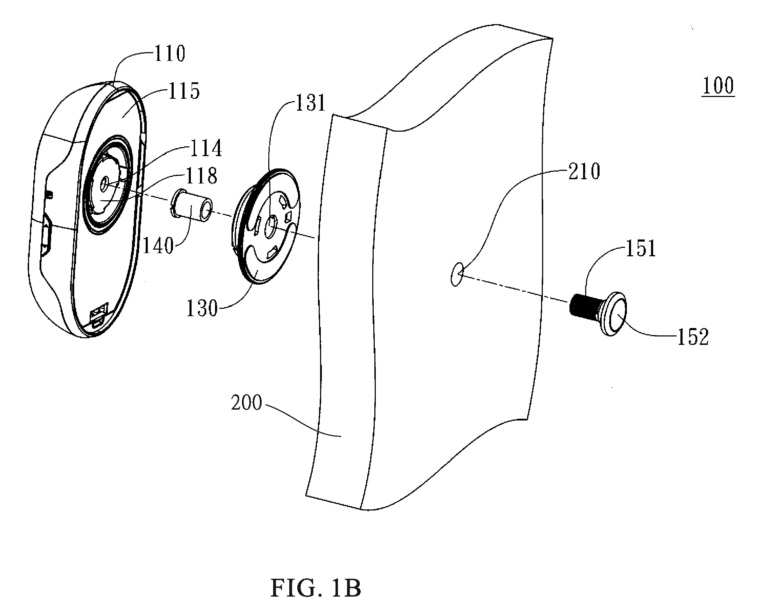

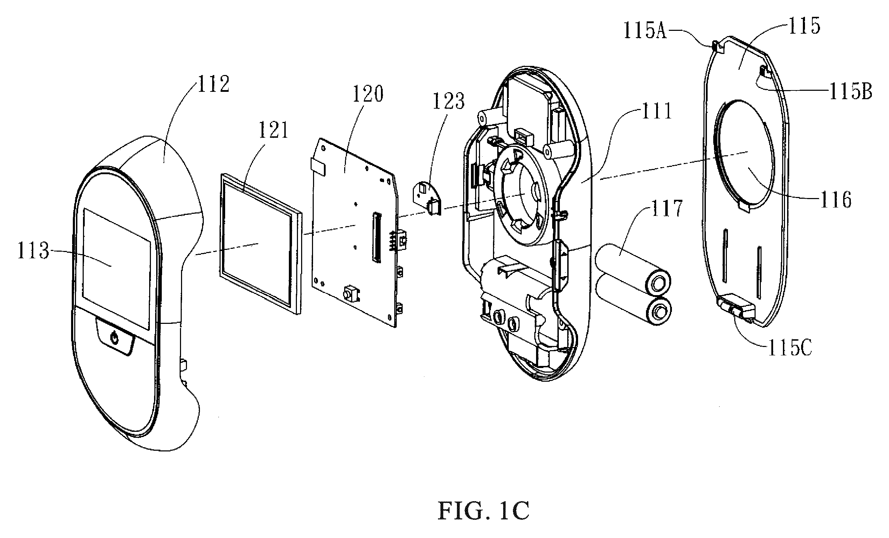

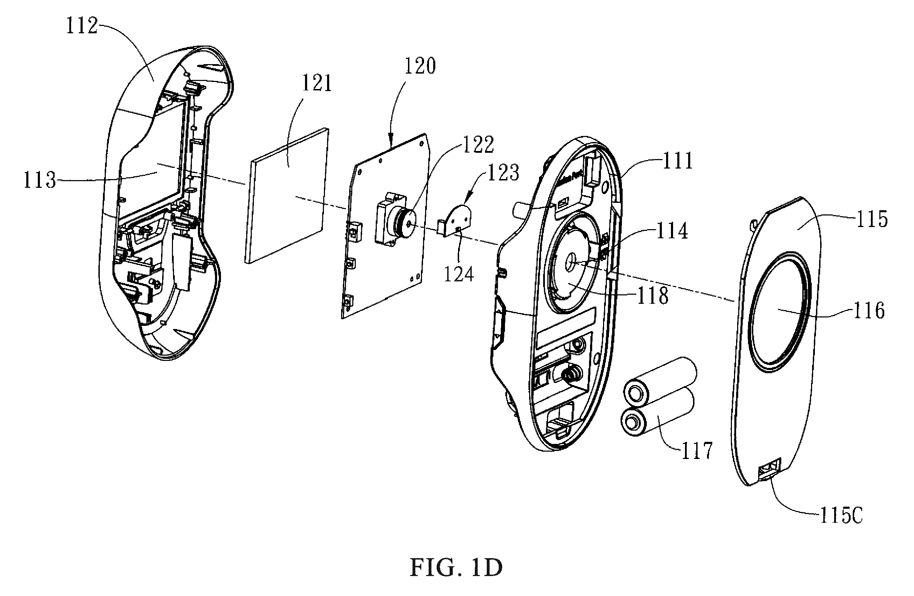

FIGS. 1A-1D are a perspective view showing the exploded components of an electronic viewer for peephole according to a first embodiment of the present invention. The electronic viewer 100 comprises: a housing 110, a main circuit board 120, a flat panel display unit 121, an image capture unit 122, a sub-circuit board 123, and an ambient light sensor 124.

The flat panel display unit 121 is electrically connected with and disposed on the main circuit board 120. The image capture unit 122 is coupled with and mounted on the main circuit board 120. The ambient light sensor 124 is fixed on and electrically connected with the sub-circuit board 123. The sub-circuit board 123 is secured on and electrically in connection with the main circuit board 120.

The housing 110 includes a front cover 111, a rear cover 112, and a lid 115. Between the front cover 111 and the rear cover 112 is defined a chamber for receiving the main circuit board 120, the flat panel display unit 121, the image capture unit 122, the sub-circuit board 123, and the ambient light sensor 124. In addition, at least one screw is provided to screw the main circuit board 120 with at least one fixing portion of the front cover 111 or at least one fixing portion of the rear cover 112. The rear cover 112 has an opening 113 defined thereon and retained with the flat panel display unit 121 so that a user views images displayed on the flat panel display unit 121. The front cover 111 has a positioning column 118 with plural tenons and a hole 114 for guiding lights into the front cover 111 and the rear cover 112, such that the image capture unit 122 and the ambient light sensor 124 can sense the lights.

The lid 115 has three connectors 115a, 115b, 115c for fixing the lid 115 in at least one longitudinal slot of the front cover 111, wherein a connector 115 is made of plastic material so as to cause flexible deformation to disengage from the least one longitudinal slot after being pressed, hence the lid 115 is removed from the front cover 111, and then at least one battery 117 is fixed or is replaced.

The electronic viewer 100 further comprises an electronic viewer holder 130, a peephole holder 140, and a lens holder 150. The lens holder 150 is used for fixing lens thereon. The lens holder 150 has a cylindrical unit 151 retained on an outer side of a door or an external side of a wall, such that the lens 152 focuses the lights of the outer side of the door 200 or the external side of the wall.

Preferably, the cylindrical unit 151 and the lens holder 150 are retained in a bore 210 of the outer side of the door or the external side of the wall.

The cylindrical unit 151 has male threads formed around an outer surface thereof. The peephole holder 140 is applied to position the electronic viewer holder 130 on an inner side of the door or an internal side of the wall. Also, the cylindrical unit 151 is formed in a hollow tube shape and has female threads arranged around an inner surface thereof so as to screw with the male threads of the cylindrical unit 151, such that the electronic viewer holder 130 is mounted on the inner side of the door or the internal side of the wall. Thereby, the electronic viewer holder 130, the peephole holder 140 and the lens holder 150 are fixed on the door or the wall, and the peephole holder 140 partially covers the cylindrical unit 151.

The lid 115 is disposed on the front cover 111 and has a circular orifice 116 so that the plural tenons of the positioning column 118 of the front cover 111 retain with mortises of the electronic viewer holder 130. Thereby, the electronic viewer holder 130 is fixed on the door or the wall by ways of the peephole holder 140 and the lens holder 150, and the housing 110 is positioned on the door or the wall.

Due to the electronic viewer holder 130 has an aperture 131, the cylindrical unit 151 is formed in a hollow tube shape, the door or the wall has the bore 210, and the cylindrical unit 151 is hollow, so the lens 152 focuses the lights outside the door 200 or the wall to the image capture unit 122 and the ambient light sensor 124.

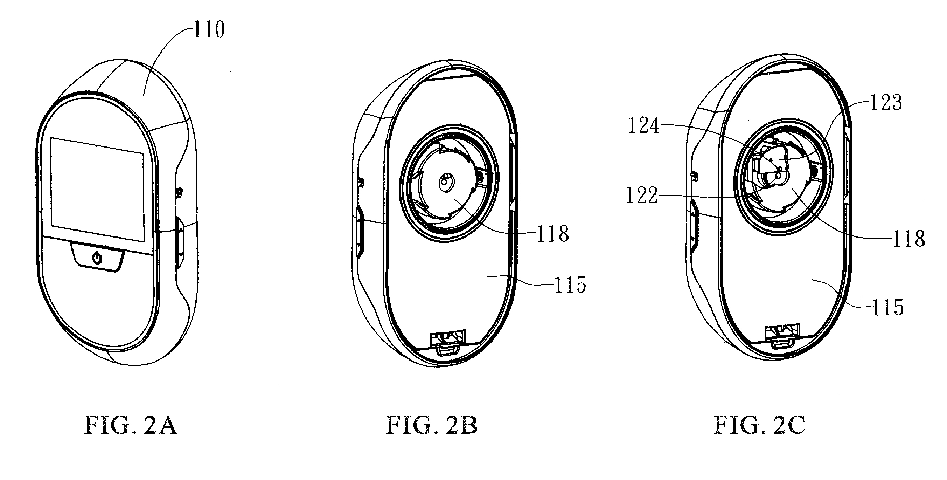

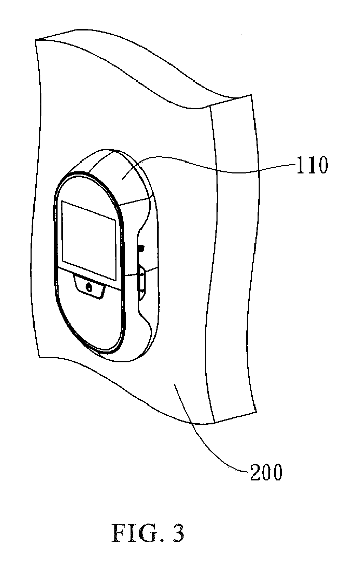

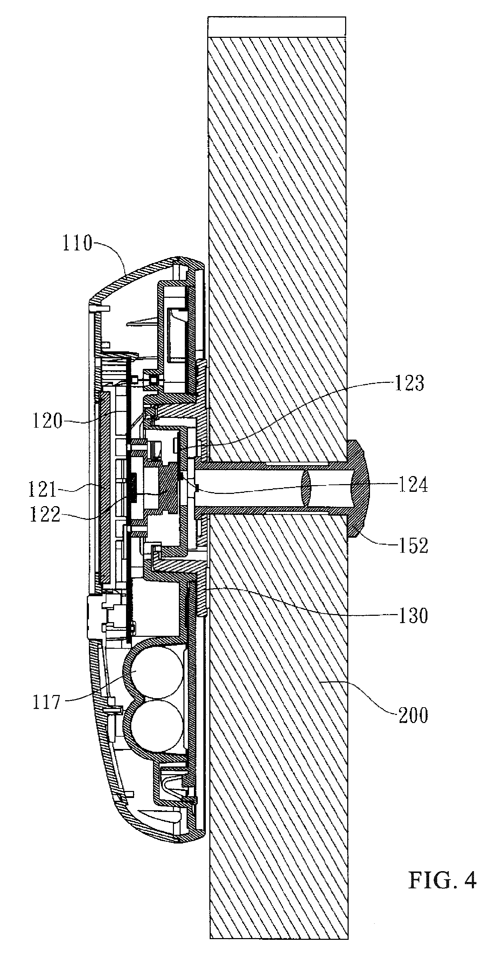

FIGS. 2A, 2B, 2C are a perspective view showing the assembly of the electronic viewer according to the first embodiment of the present invention. FIG. 3 is a perspective view showing the electronic viewer being fixed on the door or the wall according to the first embodiment of the present invention. FIG. 4 is a cross sectional view showing the electronic viewer being fixed on the door or the wall according to the first embodiment of the present invention.

The image capture unit 122 is served to shoot an image of an object, wherein the image capture unit 122 a charge coupled device (CCD) or a complementary metal-oxide semiconductor (CMOS). In this embodiment, the at least one battery 117 supplies power to the image capture unit 112, the main circuit board 120, and the sub-circuit board 123. The image capture unit 122 shoots dynamic images or still images outside the door or the wall. The main circuit board 120 includes an application specific integrated circuit (ASIC), the application specific integrated circuit is used to control the image capture unit 122 to shoot the dynamic images or the still images outside the door or the wall, and then the dynamic images or the still images are stored in a memory unit via a memory interface or are displayed on the flat panel display unit 121, wherein the memory card is any one of a secure digital memory card (SD memory card), a multimedia card (MMC), an extreme digital-picture card, and a compact flash card (CF card). The flat panel display unit 121 is any one of a liquid crystal display monitor (LCD monitor), a light emitting diode monitor (LED monitor), a touch screen, and a flat panel screen. In this embodiment, the image capture unit 122 shoots the images, and then the images are displayed on the flat panel display unit 121.

Preferably, the ambient light sensor 124 senses a change of the light source, and the electronic viewer 100 is driven so that the application specific integrated circuit controls the image capture unit 122 to shoot the dynamic images or the still images outside the door or the wall, and the dynamic images or the still images are displayed on the flat panel display unit 121. Preferably, a backlight brightness of the flat panel display unit 121 is adjusted based on the change of the light source so as to maintain brightness and decrease power consumption. For example, the electronic viewer 100 enters a sleep mode automatically after a period of set time so as to power off the flat panel display unit 121, thus saving power consumption. Preferably, the set time is within one second to twenty-four hours.

In addition, the electronic viewer 100 generates a time-lapse video automatically. For instance, the electronic viewer 100 is set by a user to operate according to the change of the light source so that the application specific integrated circuit controls the image capture unit 122 to display the still images on the flat panel display unit 121 after a time interval, and then the still images are stored in the memory unit (not shown) via the memory interface. The application specific integrated circuit converts the still images stored in the memory unit into the time-lapse video, and the time-lapse video is stored in the memory unit. Preferably, the time interval is set within one second to twenty-four hours.

The electronic viewer 100 can also store the still images by ways of the secure digital memory card (SD memory card) (not shown). The application specific integrated circuit automatically stores the time-lapse video comprised of a series of still images in the SD memory card.

The electronic viewer 100 is driven when the ambient light source 124 senses a change of ambient light source, and the still images or the dynamic images displayed on the flat panel display unit 121 are transmitted to a remote electronic device in a cable or wireless transmission manner, wherein the remote electronic device has a display unit and is any one of a mobile phone, a smart phone, a notebook computer, a tablet computer, a digital photo frame, and a monitor screen. Also, the still images or the dynamic images displayed on the flat panel display unit 121 are transmitted to and stored in a receiver in an internet or wireless communication transmission manner, such as a file or an e-mail.

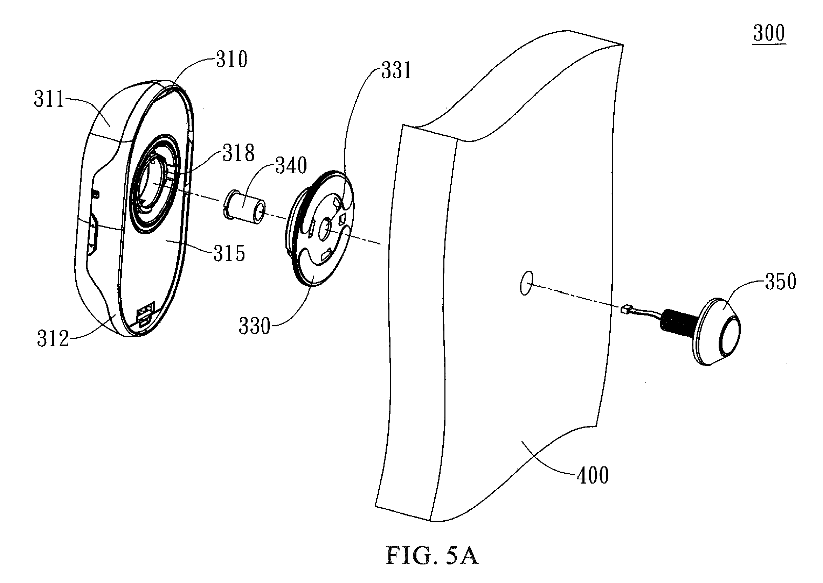

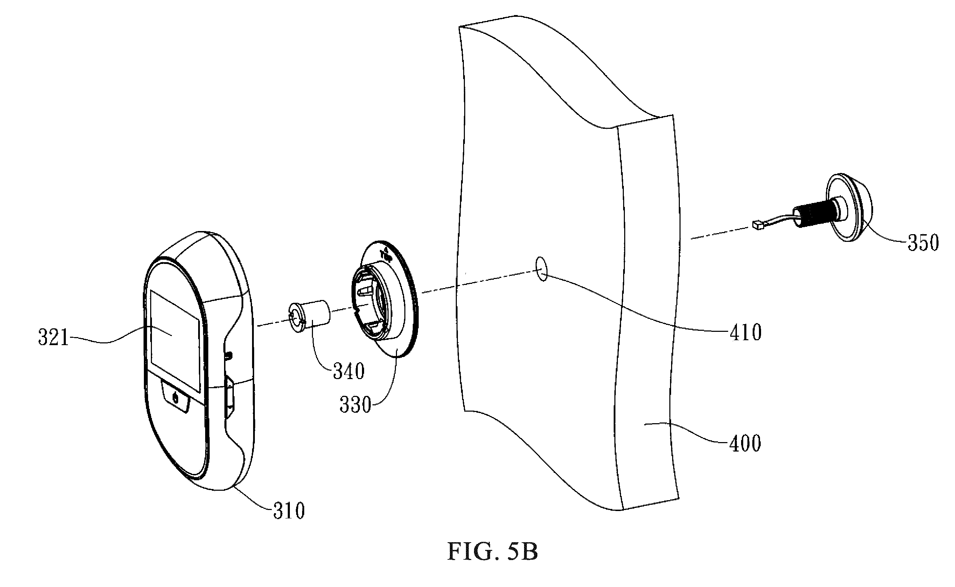

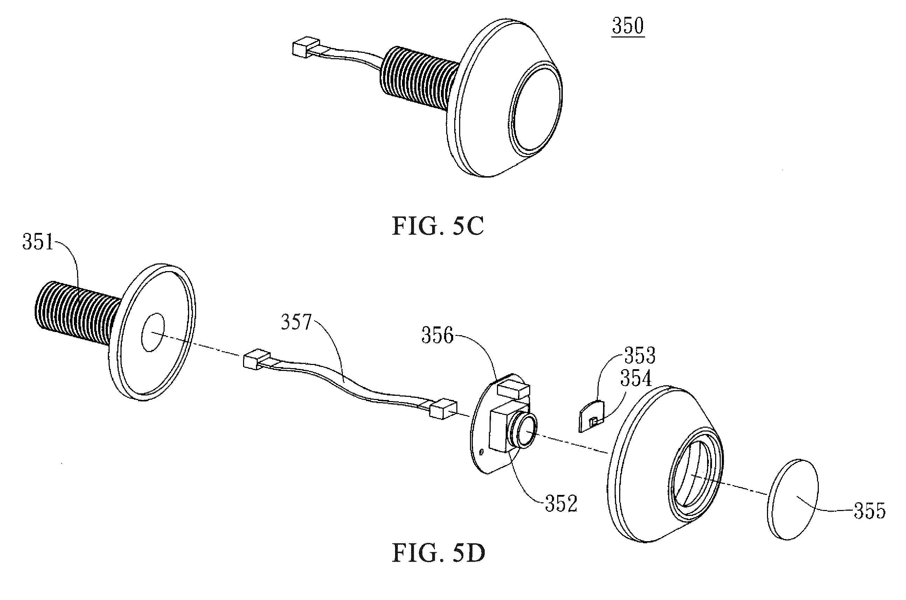

FIGS. 5A-5D are a perspective view showing the exploded components of an electronic viewer for peephole according to a second embodiment of the present invention. A difference of the electronic viewer 300 of the second embodiment from that of the first embodiment comprises: an image capture unit 352, a sub-circuit board 353, and an ambient light sensor 354 which are disposed in a camera holder 350.

The electronic viewer 300 also comprises a housing 310, a main circuit board 320, a flat panel display unit 321, and the camera holder 350. The flat panel display unit 321 is electrically connected with and mounted on the main circuit board 320.

The camera holder 350 includes an image capture unit 352, the sub-circuit board 353, an ambient light sensor 354, a lens cover 355, a camera circuit board 356, and a cable 357. The image capture unit 352 is coupled with and fixed on the camera circuit board 356. The ambient light sensor 354 is secured on the sub-circuit board 353 and is electrically coupled with the camera circuit board 356. The sub-circuit board 353 is fixed on the camera circuit board 356 and is electrically in connection with the main circuit board 320 through the cable 357.

The housing 310 includes a front cover 311, a rear cover 312, and a lid 315. Between the front cover 311 and the rear cover 312 is defined a chamber for receiving the main circuit board 320 and the flat panel display unit 321. In addition, at least one screw is provided to screw the main circuit board 320 with at least one fixing portion of the front cover 311 or at least one fixing portion of the rear cover 312. The rear cover 312 has an opening 313 defined thereon and retained with the flat panel display unit 321 so that a user views images displayed on the flat panel display unit 321. The front cover 311 has a positioning column 318 with plural tenons and a hole for inserting the cable 357 into the front cover 311 and the rear cover 312, such that the image capture unit 352 and the ambient light sensor 354 sense a change signal of lights, and then the cable 357 transmits the change signal to the main circuit board 320. The main circuit board can also transmit a control signal to the image capture unit 352 and the ambient light sensor 354 via the cable 357.

The lid 315 has three connectors for fixing the lid 315 in at least one longitudinal slot (not shown) of the front cover 311, wherein each connector is made of plastic material so as to cause flexible deformation to disengage from the least one longitudinal slot after being pressed, hence the lid 315 is removed from the front cover 311, and then at least one battery is fixed or is replaced.

The electronic viewer 300 is mounted on a door 300 and comprises an electronic viewer holder 330, a peephole holder 340, and the camera holder 350. The camera holder 350 is used for fixing the image capture unit 352, the sub-circuit board 353, the ambient light sensor 354, the lens cover 355, and the camera circuit board 356 on the camera holder 350. The camera holder 350 has a cylindrical unit 351 retained on an outer side of the door 400 or an external side of a wall, such that the lens cover 355 focuses the lights outside the door 400 or the wall to the image capture unit 352 and the ambient light sensor 354 in the camera holder 350.

Preferably, the cylindrical unit 351 is retained in a bore 410 of the outer side of the door 400 or the external side of the wall.

The cylindrical unit 351 has male threads formed around an outer surface thereof. The peephole holder 340 is applied to position the electronic viewer holder 330 on an inner side of the door 400 or an internal side of the wall. Also, the peephole holder 340 is formed in a hollow tube shape and has female threads arranged around an inner surface thereof so as to screw with the male threads of the cylindrical unit 351, such that the electronic viewer holder 330 is disposed on the inner side of the door or the internal side of the wall. Thereby, when the electronic viewer holder 330, the peephole holder 340, and the camera holder 350 are fixed on the door or the wall, the peephole holder 340 partially covers the cylindrical unit 351.

The lid 315 is fixed on the front cover 311 and has a circular orifice so that the plural tenons of the positioning column 318 of the front cover 111 retain with mortises of the electronic viewer holder 330. Thereby, the electronic viewer holder 330 is fixed on the door or the wall by ways of the peephole holder 340 and the lens holder 350, and the housing 310 is positioned on the door or the wall.

Since the electronic viewer holder 330 has an aperture 331, the peephole holder 340 is formed in a hollow tube shape, the door or the wall has the bore 410, and the cylindrical unit 351 is a hollow tube, so the cable 357 can be inserted into the front cover 311 and the rear cover 312, such that the image capture unit 352 shoots the still images or the dynamic images, and the ambient light sensor 354 senses the change signal of the lights and transmits the change signals to the main circuit board 230 through the cable 357. Furthermore, the main circuit board 320 sends the control signal to the image capture unit 352 and the ambient light sensor 354 via the cable 357.

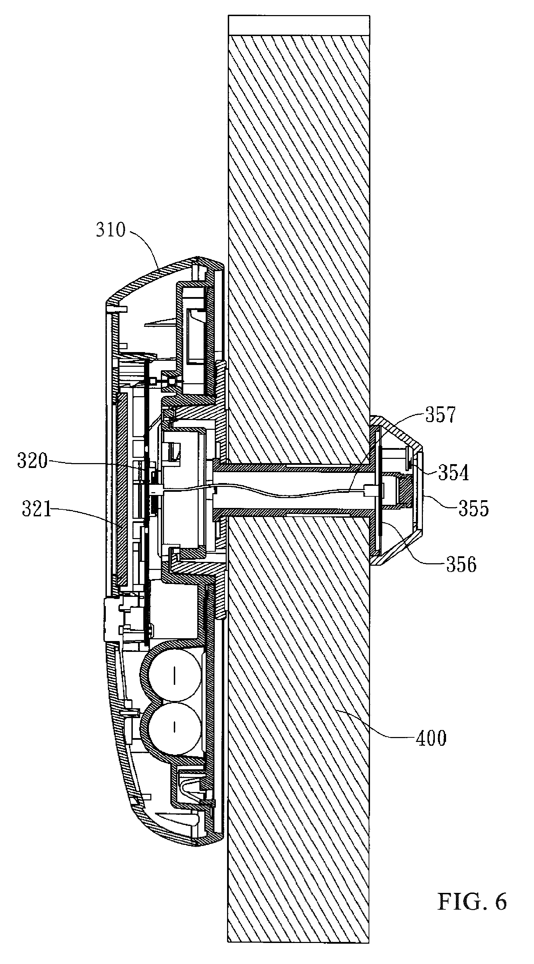

FIG. 6 is a cross sectional view showing the electronic viewer being fixed on a door or a wall according to the second embodiment of the present invention.

The image capture unit 352 is served to shoot an image of an object, wherein the image capture unit 352 a charge coupled device (CCD) or a complementary metal-oxide semiconductor (CMOS).

In this embodiment, the at least one battery supplies power to the image capture unit 352, the main circuit board 320, the camera circuit board 356, and the sub-circuit board 353. The image capture unit 122 shoots the dynamic images or the still images outside the door or the wall. The main circuit board 320 includes an application specific integrated circuit (ASIC), the application specific integrated circuit is used for controlling the image capture unit 352 to shoot the dynamic images or the still images outside the door or the wall, and then the dynamic images or the still images are stored in a memory unit via a memory interface or are displayed on the flat panel display unit 321, wherein the memory card is any one of a secure digital memory card (SD memory card), a multimedia card (MMC), an extreme digital-picture card, and a compact flash card (CF card). The flat panel display unit 321 is any one of a liquid crystal display monitor (LCD monitor), a light emitting diode monitor (LED monitor), a touch screen, and a flat panel screen. In this embodiment, the image capture unit 352 shoots the images, and then the images are displayed on the flat panel display unit 321.

Preferably, the ambient light sensor 354 senses a change of the light source, and the electronic viewer 300 is driven so that the application specific integrated circuit controls the image capture unit 35 to shoot the dynamic images or the still images outside the door or the wall, and the dynamic images or the still images are displayed on the flat panel display unit 321. Preferably, a backlight brightness of the flat panel display unit 321 is adjusted based on the change of the light source so as to maintain brightness and save power consumption. For example, the electronic viewer 300 enters a sleep mode automatically after a period of set time so as to power off the flat panel display unit 32, thus saving power consumption. Preferably, the set time is within one second to twenty-four hours.

In addition, the electronic viewer 300 generates a time-lapse video automatically. For instance, the electronic viewer 300 is set by a user to operate according to the change of the light source so that the application specific integrated circuit controls the image capture unit 352 to display the still images on the flat panel display unit 321 after a time interval, and then the still images are stored in the memory unit (not shown) via the memory interface. The application specific integrated circuit converts the still images stored in the memory unit into the time-lapse video, and the time-lapse video are stored in the memory unit. Preferably, the time interval is set within one second to twenty-four hours.

The electronic viewer 300 can also store the still images by ways of the secure digital memory card (SD memory card) (not shown). The application specific integrated circuit automatically stores the time-lapse video comprised of a series of still images in the SD memory card.

The electronic viewer 300 is driven when the ambient light source 354 senses a change of ambient light source, and the still images or the dynamic images displayed on the flat panel display unit 321 are transmitted to a remote electronic device in a cable or wireless transmission manner, wherein the remote electronic device has a display unit and is any one of a mobile phone, a smart phone, a notebook computer, a tablet computer, a digital photo frame, and a monitor screen. Also, the still images or the dynamic images displayed on the flat panel display unit 321 are transmitted to and stored in a receiver in an internet or wireless communication transmission manner, such as a file or an e-mail.

While the preferred embodiments of the invention have been set forth for the purpose of disclosure, modifications of the disclosed embodiments of the invention as well as other embodiments thereof may occur to those skilled in the art. Accordingly, the appended claims are intended to cover all embodiments which do not depart from the spirit and scope of the invention.

## Claims

1. An electronic viewer for peephole comprising:
an image capture unit (122) for shooting images;
a main circuit board (120) including an application specific integrated circuit electrically connected with the image capture unit (122) so as to control the image capture unit (122) to shoot the images;
a flat panel display unit (121) electrically connected with the main circuit board (120) so as to display the images shot by the image capture unit (122);
an ambient light sensor (124) electrically coupled with the main circuit board (120) so as to sense a change of an ambient light source, hence when the ambient light source changes, an electronic viewer (100) is driven to operate the application specific integrated circuit, and the application specific integrated circuit controls the image capture unit (122) to shoot the images so that the flat panel display unit (121) displays the images.

2. The electronic viewer as claimed in claim 1, wherein the images are still images or dynamic images.

3. The electronic viewer as claimed in claim 2, wherein the images are stored in a memory unit.

4. The electronic viewer as claimed in claim 1, wherein the electronic viewer (100) enters a sleep mode automatically after a period of set time so as to power off the flat panel display unit (121).

5. The electronic viewer as claimed in claim 1, wherein a backlight brightness of the flat panel display unit (121) is adjusted based on the change of the ambient light source so as to maintain brightness and save power consumption.

6. The electronic viewer as claimed in claim 1, wherein the images displayed on the flat panel display unit (121) are transmitted to a remote electronic device in a wireless transmission manner.

7. The electronic viewer as claimed in claim 1, wherein the images displayed on the flat panel display unit (121) are transmitted to a remote electronic device in a cable transmission manner.

8. An electronic viewer for peephole comprising:
a main circuit board (120) including an application specific integrated circuit;
a flat panel display unit (121) electrically connected with and disposed on the main circuit board (120);
an image capture unit (122) coupled with and fixed on the main circuit board (120);
a sub-circuit board (123) electrically connected with and disposed on the main circuit board (120);
an ambient light sensor (124) electrically coupled with and mounted on the main circuit board (120) so as to sense a change of an ambient light source, hence when the ambient light source changes, an electronic viewer (100) is driven to operate the application specific integrated circuit, and the application specific integrated circuit controls the image capture unit (122) to shoot the images so that the flat panel display unit (121) displays the images;
a housing (110) including:
a front cover (111);
a rear cover (112); and
a lid (115), wherein between the front cover (111) and the rear cover (112) is defined a chamber for receiving the main circuit board (120), the flat panel display unit (121), the image capture unit, and the ambient light sensor (124);
an electronic viewer holder (130);
a peephole holder (140);
a lens holder (150) used for fixing lens thereon, wherein the lens holder (150) has a cylindrical unit (151) retained on an outer side of a door (200), wherein the electronic viewer holder (130) has an aperture (131), the cylindrical unit (151) is formed in a hollow tube shape, and the door (200) has a bore (210), so the lens focuses lights outside the door (200) to the image capture unit (122) and the ambient light sensor (124).

9. The electronic viewer as claimed in claim 8, wherein the images are still images or dynamic images.

10. The electronic viewer as claimed in claim 8, wherein the electronic viewer (100) enters a sleep mode automatically after a period of set time so as to power off the flat panel display unit (121).

11. The electronic viewer as claimed in claim 8, wherein a backlight brightness of the flat panel display unit (121) is adjusted based on the change of the ambient light source so as to maintain brightness and save power consumption.

12. An electronic viewer for peephole comprising:
a main circuit board (320) including an application specific integrated circuit;
a flat panel display unit (321) electrically connected with and disposed on the main circuit board (320);
a housing (310) including:
a front cover (311);
a rear cover (312); and
a lid (315), wherein between the front cover (311) and the rear cover (312) is defined a chamber for receiving the main circuit board (320) and the flat panel display unit (321);
an electronic viewer holder (330);
a peephole holder (340);
a camera holder (350) including:
a cable (357);
a camera circuit board (356) electronically connected with the main circuit board (320) via the cable (357);
an image capture unit (352) electrically coupled with and fixed on the main circuit board (320);
a sub-circuit board (353) fixed on the camera circuit board (356) and electrically connected with the main circuit board (320) through the cable (357);
an ambient light sensor (354) secured on the sub-circuit board (353) and electrically coupled with the camera circuit board (356), such that the ambient light sensor (354) senses a change of ambient light source, and the electronic viewer (300) is driven so that the application specific integrated circuit controls the image capture unit (352) to shoot images, and the images are displayed on the flat panel display unit (321);
wherein the camera holder (350) has a cylindrical unit (351) retained on an outer side of a door (400), and the electronic viewer holder (330) has an aperture (331), the cylindrical unit (351) is formed in a hollow tube shape, and the door (400) has a bore (410), hence the cable (357) is inserted into the front cover (311) and the rear cover (312), such that the image capture unit (352) shoots the images, and the ambient light sensor (354) senses a change signal of the lights and transmits the change signals to the main circuit board (320) through the cable (357), the main circuit board (320) also transmits a control signal to the image capture unit (352) and the ambient light sensor (354) via the cable (357).

13. The electronic viewer as claimed in claim 12, wherein the images are one of still images or dynamic images.

14. The electronic viewer as claimed in claim 12, wherein the electronic viewer (300) enters a sleep mode automatically after a period of set time so as to power off the flat panel display unit (321).

15. The electronic viewer as claimed in claim 12, wherein a backlight brightness of the flat panel display unit (321) is adjusted based on the change of the ambient light source so as to maintain brightness and save power consumption.
